# EUROPEAN PATENT APPLICATION

(11) **EP 3 591 622 A1**
(43) Date of publication of application: **08.01.2020**
(21) Application number: 17898873.9
(22) Date of filing: 31.08.2017
(51) Int. Cl.: G06T 19/00

(54) **THREE-DIMENSIONAL SPACE MODE COLLECTION METHOD AND APPARATUS BASED ON ELECTROMAGNETIC WAVES**

(30) Priority: 28.02.2017 CN 201710111948
(71) Applicant: ZTE Corporation, Shenzhen, Guangdong 518057 (CN)
(72) Inventor: SHEN, Shaowu, Shenzhen Guangdong 518057 (CN)
(74) Representative: Rosenberg, Muriel Sylvie
(86) International application number: PCT/CN2017/099835
(87) International publication number: WO 2018/157571

(57) **Abstract**

Disclosed are a three-dimension space model collection method and apparatus based on electromagnetic waves. The method comprises: collecting electromagnetic wave model data of various materials in a space; establishing an electromagnetic wave model library according to the electromagnetic wave model data; drawing a topographic map of a three-dimension space; dividing the three-dimension space into different types of regional spaces according to a drawing result of the topographic map, wherein the different types of regional spaces use different collection methods; collecting at least one of the following electromagnetic parameters for each regional space of the three-dimension space: an electromagnetic wave reflection parameter, an electromagnetic wave refraction parameter, and an electromagnetic wave penetration parameter; and comparing the collected electromagnetic parameters with the electromagnetic wave model data in the electromagnetic wave model library, and establishing a three-dimension space model according to the result of the comparison.

## Description

### TECHNICAL FIELD

The present disclosure relates to the three-dimension space model acquisition technology, particularly, to a three-dimension space model acquisition method and apparatus based on electromagnetic waves.

### BACKGROUND

The acquisition of a three-dimension space model is of great significance to the Virtual Reality (VR) technology. At present, the acquisition schemes for the three-dimension space model are roughly as follows:
Acquisition scheme A: the three-dimension space model is spliced and constructed by the model library in a drawing software. This method is often out of the real scene.

Acquisition scheme B: High-altitude shooting is performed by satellite, each part of the image is acquired and post-spliced, and finally a three-dimension space model is obtained. Although this method can represent the contours between buildings or external contours well, the spatial structure and material in the buildings cannot be truly reflected.

Acquisition scheme C: 360-degree panorama shooting and acquisition in the indoor space is performed through a foreground camera, then post-processing and production are made, and finally a three-dimension space model is obtained. This method can truly and comprehensively reflect the space, but there will be obvious stitching traces, and the shooting task is heavy, which cannot be made and used by an individual user.

### SUMMARY

To solve the above technical problem, the embodiments of the present disclosure provides a three-dimension space model acquisition method and apparatus based on electromagnetic waves.

The three-dimension space model acquisition method based on electromagnetic waves provided by an embodiment of the present disclosure includes: acquiring electromagnetic wave model data of various substances in a space; establishing an electromagnetic wave model library according to the electromagnetic wave model data; drawing a topographic map of a three-dimension space; dividing the three-dimension space into different types of regional spaces according to a drawing result of the topographic map, wherein different acquisition modes are applied to different types of regional spaces; acquiring at least one of following electromagnetic parameters for each regional space of the three-dimension space: an electromagnetic wave reflection parameter, an electromagnetic wave refraction parameter, and an electromagnetic wave penetration parameter; and comparing the acquired electromagnetic parameters with the electromagnetic wave model data in the electromagnetic wave model library, and establishing a three-dimension space model according to a result of the comparison.

In an embodiment of the present disclosure, the method further includes: splicing two or more three-dimension space models; and rendering a spliced three-dimension space model to form a virtual reality (VR) scene.

In an embodiment of the present disclosure, in establishing the electromagnetic wave model library, the method further includes: storing transmission model data of various substances, the transmission model data including at least one of: a reflection coefficient, a refractive index, and a penetration coefficient; or, acquiring material model parameters, the material model parameters including at least one of: a conductivity, a dielectric constant, a magnetic permeability, and a thickness; and calculating corresponding transmission model data according to the acquired material model parameters and storing the same.

In an embodiment of the present disclosure, the step of drawing the topographic map of the three-dimension space includes: setting basic coordinates of the three-dimension space; detecting, under the basic coordinates, a movement track of a user along a horizontal plane of the space, and splicing and drawing the movement track to form a two-dimension topographic map in the three-dimension space; detecting a movement track of the user along a vertical direction of the space, determining a spatial height difference in a longitudinal direction; drawing a topographic map of the three-dimension space on the basis of the two-dimension topographic map, the topographic map of the three-dimension space being formed by layered two-dimension topographic maps;

In an embodiment of the present disclosure, the step of dividing the three-dimension space into different types of regional spaces according to the drawing result of the topographic map includes: grouping the two-dimension topographic maps of different layers into different acquisition nodes according to the drawing result of the topographic map; and performing path planning on each acquisition node, and setting acquisition branches and acquisition routes.

In an embodiment of the present disclosure, the step of comparing the acquired electromagnetic parameters with the electromagnetic wave model data in the electromagnetic wave model library and establishing the three-dimension space model according to the result of the comparison includes: comparing an acquired electromagnetic parameter with the electromagnetic wave model data in the electromagnetic wave model library, to obtain a material and a size of an object corresponding to the acquired electromagnetic parameter; and establishing the three-dimension space model based on the topographic map of the three-dimension space according to the material and the size of the object.

In an embodiment of the present disclosure, the acquired electromagnetic wave reflection parameter characterizes a thickness of an object; the acquired electromagnetic wave refraction parameter characterizes the thickness and a material of the object; and the acquired electromagnetic wave penetration parameter characterizes the thickness and the material of the object.

In an embodiment of the present disclosure, the method further includes: selecting an acquisition mode for a current regional space according to a first-time acquisition result.

In an embodiment of the present disclosure, the step of selecting the acquisition mode for the current regional space according to the first-time acquisition result includes: determining a material of an object in the current regional space according to the first-time acquisition result; selecting at least one of following acquisition modes according to the material: an electromagnetic wave reflection parameter acquisition mode, an electromagnetic wave refraction parameter acquisition mode, and an electromagnetic wave penetration parameter acquisition mode.

In an embodiment of the present disclosure, the method further includes: performing acquisition multiple times in each acquisition mode, and calculating an average variance of the acquired electromagnetic parameters for each acquisition mode; using an acquisition mode with a smallest average variance as a finally selected acquisition mode.

The three-dimension space model acquisition apparatus based on electromagnetic waves provided by an embodiment of the present disclosure includes: an acquisition unit configured to acquire electromagnetic wave model data of various substances in a space; a first establishment unit configured to establish an electromagnetic wave model library according to the electromagnetic wave model data; a drawing unit configured to draw a topographic map of a three-dimension space; a planning unit configured to divide the three-dimension space into different types of regional spaces according to a drawing result of the topographic map, wherein different acquisition modes are applied to different types of regional spaces; wherein the acquisition unit is further configured to acquire at least one of following electromagnetic parameters for each regional space of the three-dimension space: an electromagnetic wave reflection parameter, an electromagnetic wave refraction parameter, and an electromagnetic wave penetration parameter; and a second establishment unit configured to compare the acquired electromagnetic parameters with the electromagnetic wave model data in the electromagnetic wave model library, and establish a three-dimension space model according to a result of the comparison.

In an embodiment of the present disclosure, the apparatus further includes: a processing unit configured to splice two or more three-dimension space models; and render a spliced three-dimension space model to form a virtual reality (VR) scene.

In an embodiment of the present disclosure, the apparatus further includes: a storage unit configured to store transmission model data of various substances, the transmission model data including at least one of: a reflection coefficient, a refractive index, and a penetration coefficient; the acquisition unit is further configured to acquire material model parameters, the material model parameters including at least one of: a conductivity, a dielectric constant, a magnetic permeability, and a thickness; and the storage unit is further configured to calculate corresponding transmission model data according to the acquired material model parameters and storing the same.

In an embodiment of the present disclosure, the drawing unit is exemplarily configured to: set basic coordinates of the three-dimension space; detect, under the basic coordinates, a movement track of a user along a horizontal plane of the space, and splice and draw the movement track to form a two-dimension topographic map in the three-dimension space; detect a movement track of the user along a vertical direction of the space, determine a spatial height difference in a longitudinal direction; draw a topographic map of the three-dimension space on the basis of the two-dimension topographic map, the topographic map of the three-dimension space being formed by layered two-dimension topographic maps.

In an embodiment of the present disclosure, the planning unit is exemplarily configured to: group the two-dimension topographic maps of different layers into different acquisition nodes according to the drawing result of the topographic map; and perform path planning on each acquisition node, and set acquisition branches and acquisition routes.

In an embodiment of the present disclosure, the second establishment unit is exemplarily configured to: compare an acquired electromagnetic parameter with the electromagnetic wave model data in the electromagnetic wave model library, to obtain a material and a size of an object corresponding to the acquired electromagnetic parameter; and establish the three-dimension space model based on the topographic map of the three-dimension space according to the material and the size of the object.

In an embodiment of the present disclosure, the acquired electromagnetic wave reflection parameter characterizes a thickness of an object; the acquired electromagnetic wave refraction parameter characterizes the thickness and a material of the object; and the acquired electromagnetic wave penetration parameter characterizes the thickness and the material of the object.

In an embodiment of the present disclosure, the apparatus further includes: a control unit configured to select an acquisition mode for a current regional space according to a first-time acquisition result.

In an embodiment of the present disclosure, the control unit is exemplarily configured to determine a materials of an object in the current regional space according to the first-time acquisition result; select at least one of following acquisition modes according to the materials: an electromagnetic wave reflection parameter acquisition mode, an electromagnetic wave refraction parameter acquisition mode, and an electromagnetic wave penetration parameter acquisition mode.

In an embodiment of the present disclosure, the control unit is further configured to perform acquisition multiple times in each acquisition mode, and calculate an average variance of the acquired electromagnetic parameters for each acquisition mode; use an acquisition mode with a smallest average variance as a finally selected acquisition mode.

According to the technical solutions of the embodiments of the present disclosure, the following are performed: acquiring electromagnetic wave model data of various substances in a space; establishing an electromagnetic wave model library according to the electromagnetic wave model data; drawing a topographic map of a three-dimension space; dividing the three-dimension space into different types of regional spaces according to a drawing result of the topographic map, wherein different acquisition modes are applied to different types of regional spaces; acquiring at least one of following electromagnetic parameters for each regional space of the three-dimension space: an electromagnetic wave reflection parameter, an electromagnetic wave refraction parameter, and an electromagnetic wave penetration parameter; and comparing the acquired electromagnetic parameters with the electromagnetic wave model data in the electromagnetic wave model library, and establishing a three-dimension space model according to a result of the comparison. The technical solutions of the embodiments of the present disclosure provide an intelligent, convenient, and fast three-dimension space model acquisition apparatus and method for a mobile terminal or a wearable device, which extracts the model parameters of the building and the decorative materials in daily life by the electromagnetic-wave-signal transceiver and geomagnetic sensor in the user's own mobile terminal or wearable device based on the model values of electromagnetic-wave reflection, refraction and penetration, so as to acquire the scenes and spatial parameters of our life and builds a VR model in an omnidirectional 360-degree manner in real time, and forms a 3D map and venue of real VR materials through post rendering and construction.

An embodiment of the present disclosure provides a storage medium which is configured to store program codes for performing the three-dimension space model acquisition method based on electromagnetic waves as mentioned above.

### BRIEF DESCRIPTION OF THE FIGURES

The drawings generally illustrate the various embodiments discussed herein by way of example but not limitation.
Fig. 1 is a block diagram of a three-dimension space model acquisition apparatus based on electromagnetic waves according to an embodiment of the present disclosure;
Fig. 2 is a first schematic flow chart of a three-dimension space model acquisition method based on electromagnetic waves according to an embodiment of the present disclosure;
Fig. 3 is a second schematic flow chart of a three-dimension space model acquisition method based on electromagnetic waves according to an embodiment of the present disclosure; and
Fig. 4 is a schematic structural diagram of a three-dimension space model acquisition apparatus based on electromagnetic waves according to an embodiment of the present disclosure.

### DETAILED DESCRIPTION

The implementations of the embodiments of the present disclosure will be described in detail below in conjunction with the drawings in order to more fully understand the features and technical contents of the embodiments of the present disclosure. The attached drawings are for illustrative purposes only and are not intended to limit the embodiments of the present disclosure.

In game scenes or VR scenes, each scene is generally constructed based on a virtual model. For example, a virtual model is built and rendered by a specific software, and the entire production process has a long time period, a large amount of tasks, and a high production cost. In the real-scene model acquisition, the panoramic camera is generally used for photography and splicing. Since the cost of 3D photography is also high, and there is a certain degree of distortion, the constructed virtual model is not completely consistent with the real-scene model. In shopping malls or complex indoor spaces, the floor plan tends to guide customers or users less intuitively. In this case, due to the occlusion of buildings, the Global Positioning System (GPS) signal will become extremely weak and will not work in indoor navigation. In the case of a multi-storey building, two people in a same vertical plane tend to be displayed as a same point on a traditional map. If there is a three-dimension space model, it will be much easier. It can be seen that, in the VR scene, if the user wants to experience the life scene of a role or it is desired to render a relevant game environment in our real living space, acquisition and production of a real model of the three-dimension space is a technical problem to be solved urgently. In view of this, the embodiments of the present disclosure provide a three-dimension space model acquisition method and apparatus based on electromagnetic waves.

During the transmission procedure, electromagnetic waves are exposed to different materials, such as free space, infrastructure materials (such as walls, glass, doors and windows, stone pillars, wood, reinforced concrete, compartments), etc., different refraction or reflection signals will be generated; in a case of the compartment space, it may lead to different degrees of signal attenuation. By using the radio wave transmitting circuits having different frequency bands and different propagation distances built in a terminal, taking into account the characteristics of refraction, reflection, and penetration of electromagnetic waves in various directions as tested, and by using a comparison test of signal transmission and attenuation models, and the acquired geomagnetic orientation parameters of the building itself, a three-dimension space model of the user's current space can be drawn in a short time.

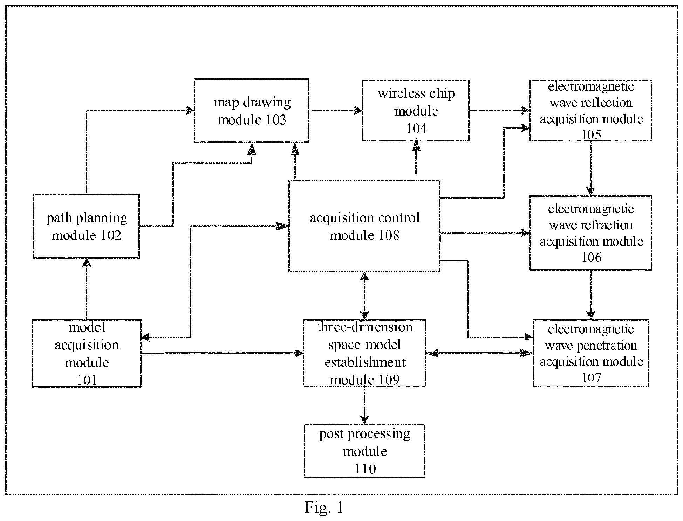

Fig. 1 is a block diagram of a three-dimension space model acquisition apparatus based on electromagnetic waves according to an embodiment of the present disclosure. The apparatus may be provided in a mobile terminal, such as a mobile phone, or may be provided in a wearable device, such as a helmet. As shown in Fig. 1, the apparatus includes: a model acquisition module 101, a path planning module 102, a map drawing module 103, a wireless chip module 104, an electromagnetic wave reflection acquisition module 105, an electromagnetic wave refraction acquisition module 106, an electromagnetic wave penetration acquisition module 107, an acquisition control module 108, a three-dimension space model establishment module 109, and a post processing module 110.

The connection relationships between and the functions of the modules in the above apparatus will be exemplified in the following with reference to Fig. 1.

The model acquisition module 101 is connected to the electromagnetic wave acquisition modules 105 to 107 via the acquisition control module 108, and is configured to acquire unit model data of electromagnetic waves for various building materials, spaces, living items and the like within the space, and establish a unit model library.

The model acquisition module 101 is further configured to store the electromagnetic wave transmission model data of the building materials, the free space, and the like, and also to acquire parameters of material models (such as common free three-dimension space model, water body model, brick material model, concrete material model, jade material model, metal material model, solid wood material model, glass material model, door and window model, etc.) in the field and store the same. If the conductivity, the dielectric constant, the magnetic permeability, the thickness, etc. of a material are known, the model acquisition module 101 can also calculate the electromagnetic wave reflection coefficient, the electromagnetic wave refractive index or the electromagnetic wave penetration coefficient of the specific material.

The electromagnetic wave parameters acquired by the model acquisition module are not only affected by the current electromagnetic wave frequency, the atmosphere, and the reflection, refraction and penetration properties of the material itself, etc., but also by the temperature, pressure, humidity and other factors at that time. For example, the propagation rate of the electromagnetic wave in vacuum is C, and the propagation rate of electromagnetic wave in the atmosphere is C/N, where N is the refractive index of the air. In a practical test, first, an average air refractive index model is used for calculation, and then the current ambient temperature, air pressure, humidity, etc. are measured by the sensors built in a mobile phone. Next, the current real-time air refractive index is calculated, and then the specific propagation rate of the emitted electromagnetic wave in the space is derived. Illustratively, assuming that λ is a wavelength of the electromagnetic wave, f is a frequency of the electromagnetic wave, the propagation rate of the electromagnetic wave is v=λf. The propagation rate of the electromagnetic wave in vacuum is C, which is equal to a product of the wavelength λ and the frequency f, i.e., C=λf. In the non-vacuum, the electromagnetic wave has a different wavelength, which is affected by the dielectric constant and the electrical conductivity. Further, the propagation rate of the electromagnetic wave may be (eu)^(-1/2), where e is the dielectric constant and u is the magnetic permeability. For different media, the values of e and u are different.

For the boundary of a three-dimension space, such as walls with different paints, cement concrete, brick, glass, metal, stone, etc., the average propagation rate of the electromagnetic wave is calculated by the reflectivities, refractive indexes or penetration rates of different materials.

The map drawing module 102, which is connected to the path planning module 103, is configured to define basic coordinates of a space, to draw a topographic map, to record and return a current orientation and position, to recognize and splice a characteristic marker. According to a GPS module carried by the terminal its own, the positioning and setting of the central coordinate origin is realized. When a user walks in a certain direction in the space vertically or horizontally, the map drawing module records the user's current movement track in real time. By splicing and drawing the movement path in the two-dimensional space, a two-dimensional topographic map in a final three-dimension space is formed. Then, by the moving scanning in the vertical direction, the space height difference in the vertical direction is determined, and the distributed map acquisition of the three-dimensional spatial layers is realized. During the acquisition process, the indoor spatial distance information is retuned back to and recorded in the terminal in real time, as a correction and supplement to the original planar GPS map information, so as to achieve a three-dimensional map drawing, facilitating a subsequent path planning and electromagnetic wave information acquisition.

The path planning module 103, which is connected to the map drawing module 102, is configured to perform a path planning of omnidirectional scanning in a three-dimension space. It divides a three-dimension space according to a first-time drawing result of a map, and utilizes different scanning and modeling manners for different types of spaces and materials. On the basis of original overall map information of the map drawing module, the path planning module performs path planning on a same continuous surface, and groups different continuous surfaces as acquisition nodes of different paths. The device sets up acquisition branches and walking routes, and the user completes the electromagnetic wave acquisition operation one by one under the guidance of the path planning module until all the planned nodes are covered.

The wireless chip module 104, which is connected to the electromagnetic acquisition modules 105 to 107, is configured to emit and receive various types of electromagnetic signals, to perform demodulation and analysis processes on the acquired parameters, and to perform real-time detection and acquisition on the received wireless signal magnetic field. This module is composed of multiple wireless chips in the user terminal, and, according to different working distances and performances, is mainly composed of 2.4G/5G WIFI chip, Bluetooth chip, RFID chip, FM and other wireless transceiver chips, together with a 11AD 60G directional electromagnetic wave signal. In the practice, it may be one of the above, or a combination of two or more of them; when the model acquisition mode is turned on, the wireless chip module is turned on, and performs non-signaling wireless transmission and reception by preset instructions. The frequency band, target power, and rate of the signals sent and received by it may be adjusted and transmit in real time according to the current scene requirement. The wireless chip module scans the surrounding scene continuously, and performs frequency division, filtering, amplification, and demodulation on the scanned electromagnetic wave signal through a receiving antenna and a radio frequency receiving circuit built in the device, thereby converting it/them to a digital signal that can be recognized by a baseband chip.

The electromagnetic wave reflection acquisition module 105, which is connected to the acquisition control module 108, is configured to acquire reflection parameters of electromagnetic waves that are irradiated onto a material in a three-dimension space from different angles and orientations. For planes suitable for acquiring a reflected electromagnetic wave, the wireless chip module measures the distance and the thickness of the model by transmitting and receiving a frequency-fixed signal. The thicker the wall of the building, the stronger the reflected electromagnetic wave. Therefore, the current building material types can be determined by measuring the reflection coefficients of objects of different thicknesses.

It can be seen from the characteristic of electromagnetic wave that, when an electromagnetic wave is incident from a medium having a small dielectric constant (such as air) to a building having a large dielectric constant, the reflection coefficient is a negative value, and the reflected wave has an opposite phase. Meanwhile, the greater the difference in dielectric constant between the two, the stronger the oscillation of the reflected wave. If the reflected wave signal is regular and is strong at a certain frequency, the intensity of the amplitude thereof is regular, and the reflected wave has an opposite phase, then the thickness of and the distance from the building can be acquired by the electromagnetic wave reflection method.

The electromagnetic wave refraction acquisition module 106, which is connected to the acquisition control module 108, is configured to acquire refraction parameters of electromagnetic waves that are irradiated onto a material in a three-dimension space from different angles and orientations. The electromagnetic waves will be refracted when there is an obstacle during the transmission procedure. For buildings with continuous boundaries, or for scenes where electromagnetic waves can pass around the building, the type and the thickness of the current building is tested by the principle of electromagnetic wave incidence and refraction. Since different objects have different refractive indexes for an electromagnetic wave, the material properties of the current substance can be determined by measuring the refractive index value of the electromagnetic wave irradiated to the object. Illustratively, an electromagnetic wave signal with fixed-frequency and rated power is transmitted by the wireless chip module to an obstacle at a certain angle, and a terminal collector in which the antenna direction is variable is placed on the other side of the obstacle; by adjusting the direction of the receiving antenna, the value of an angle at which the receiving antenna receives a signal with the maximum strength value is taken as a final angle value; the refractive index of the current obstacle is calculated by the conversion between the incident angle and the refraction angle, thereby determining the material properties of the current substance.

The electromagnetic wave penetration acquisition module 107, which is connected to the acquisition control module 108, is configured to acquire penetration parameters of electromagnetic waves that are irradiated onto a material in a three-dimension space from different angles and orientations; this module is configured to acquire a penetration loss of the electromagnetic wave when penetrating a material of a three-dimension space, and send the acquisition resultant to a comparison and determination module to perform data analysis.

In a case that the reflection or refraction waveform of an electromagnetic wave on a building is disordered, the amplitude of the waveform is irregular, and the reflection phase or refraction phase is also irregular, the acquisition of materials and models of the building space can only be achieved by using the penetration characteristic of the electromagnetic wave.

Since the electromagnetic wave signal will attenuate after penetrating the human body during the transmission procedure, and other materials (such as air, water body, or basic building materials such as stone, brick walls, wood, steel, concrete, etc.) will also cause different signal attenuation in the electromagnetic wave that penetrates them, the areas, thicknesses and shapes of different building materials can be obtained by using the different penetration characteristics of the different signals transmitted by the radio wave transmitter in the terminal to the buildings and by the comparison test with the signal attenuation models.

The penetration losses of wireless signals with different frequencies are not the same, which ranges from 5DB to 30DB. The higher the frequency, the weaker the diffraction ability of the electromagnetic wave, the higher the linear test capability, and the higher the penetration loss. Therefore, by the emission and reception/acquisition of electromagnetic wave signals of a plurality of sets of wireless chips on a user terminal or the wearable device used for rescue, and by using the difference between the reference power and the power after penetration received by the terminal antenna, the penetration detection for distinguishing a specific human body and an object can be realized. For example, at a frequency of 2.4 GHz, the loss of electromagnetic wave after penetrating a solid wall is 4DB, and the loss of electromagnetic wave after penetrating wood is 9DB. Meanwhile, during the transmission procedure, the propagation path of the electromagnetic wave passes through the free space and various media, and the signal is reflected and refracted between these media. The respective layers of media are different in the power loss and attenuation factor due to different dielectric constants and electrical conductivities thereof, and different incident angles. In a case where the building materials are relatively simple, or the stacking diagram of the building structure layers is known, the attenuation values of specific materials per unit thickness (for example, the attenuation value of the brick structure is 0.35 dB/cm, and the attenuation value of the concrete structure is 0.6 dB/cm) are acquired in advance. In a case that the electromagnetic wave system attenuation value of a simple single-layer or multi-layer structure is known, the thickness of and the rough distance from the barrier structure can be calculated by comparing the electromagnetic wave penetration attenuation model parameters of the respective layers.

In practical applications, if the structural materials in the field are complex and do not match the model parameter values, a direct sampling test method may also be adopted. The attenuation value per unit thickness of a structural material in the field is tested and stored in a custom parametric model. Then, the exact thickness value of the building material being tested is obtained by using the tested total system loss.

In order to reduce the test error, the emission and reception of the electromagnetic wave need to be tested multiple times, that is, the average value of the penetration loss needs to be acquired. The exemplary number of the tests needs to be adjusted according to the fluctuation range of the test values. If the fluctuation range of the test values is small, fewer test times are also acceptable. If the fluctuation range of the test values is relatively large, indicating that the test environment is more complicated, the larger number of the acquisitions will be adaptively adopted.

The acquisition control module 108, which is connected to other modules, is configured for path planning, address drawing, and controlling of acquisition, reception and emission of the electromagnetic wave, and also configured to respond to a received rescue signal. This module may select a scanning mode for the current space according to the result of a first-time scanning, for example, select an electromagnetic wave reflection acquisition mode, an electromagnetic wave refraction acquisition mode, or an electromagnetic wave penetration acquisition mode, etc., according to the materials of the current three-dimension space.

The selection of the three acquisition modes mainly depends on the characteristics of the boundary materials of the current three-dimension space. For example, if some materials are light in color, smooth in surface and flat in contact surface, and have strong reflection ability, the electromagnetic wave reflection acquisition mode is suitable. If some materials are darker in color and the contact surfaces are irregular, the electromagnetic wave refraction acquisition mode is suitable. If it is desired to test the specific contour or thickness of a material, the electromagnetic wave penetration acquisition mode is suitable.

Meanwhile, when selecting the test mode, it is also necessary to compare the acquisition accuracy of different acquisition modes. A mode with a higher test accuracy and consistency are usually selected as the final acquisition mode. As for a current acquisition mode, if the consistency of the average value of multiple tests is higher, and the normal distribution is more concentrated, it means that the current acquisition mode has a minimum error. In the model acquisition module, it also shows which material is suitable for which acquisition mode according to the characteristics of the unit model.

The three-dimension space model establishment module 109, which is connected to the model acquisition module, is configured to perform comparison analysis on the acquired system magnetic field parameters and the original single-material model parameters, obtain exemplary three-dimensional dimension parameters of the positions of the three-dimension space model, and establish a corresponding three-dimension space model. On the basis of the plane map drawing, the three-dimension space model establishment module realizes the determination and selection of the building materials of the three-dimension space model by the above various electromagnetic wave acquisition mechanisms of the building materials; subsequently, the selected building materials are filled into the original three-dimension space frame, so that the current three-dimension space model becomes concrete and real; meanwhile, for the intersection of different building materials, the smooth transition of the boundary may be realized by a user selection or an automatic filling. The three-dimension space model establishment module may also perform real-object image fitting on the scanned boundary area by the user taking a photo of a certain area, so as to correct an error acquisition model or a fuzzy acquisition area.

The post processing module 110, which is connected to the three-dimension space model establishment module 109, is configured to perform post correction and processing on the original three-dimension space model. The user may splice and render the model according to his/her own needs, add specific props and decorations to form a 3D map and venue of real VR materials. The post processing module may set the style, the color, and the background of the acquired three-dimension space model. It may also realize continuous or non-continuous splicing of multiple three-dimension space models, and even add the buildings in a certain model library into an acquired three-dimension space, and perform scaling, moving, decorating, etc., on the certain model library. After the above processing is completed, the user may obtain a unique three-dimension space model for the creation and the application of the VR materials.

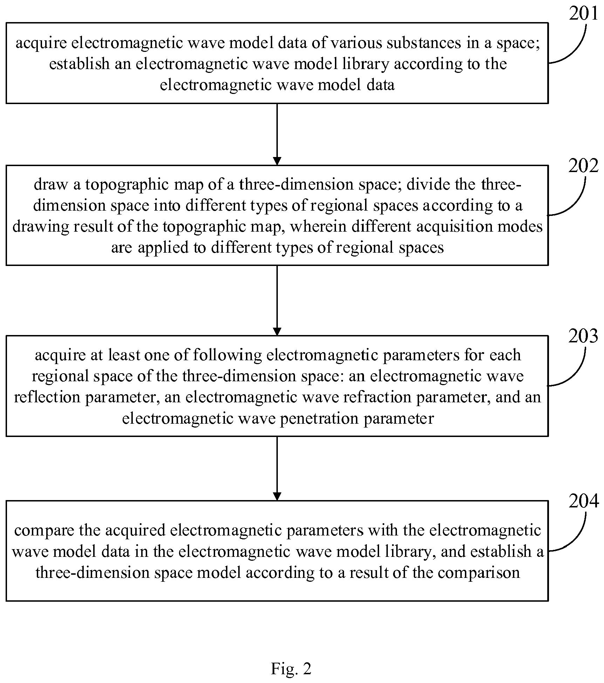

Fig. 2 is a first schematic flow chart of a three-dimension space model acquisition method based on electromagnetic waves according to an embodiment of the present disclosure. As shown in Fig. 2, the three-dimension space model acquisition method based on electromagnetic waves includes steps 201 to 204.

At, step 201, electromagnetic wave model data of various substances in a space is acquired; and an electromagnetic wave model library is established according to the electromagnetic wave model data.

In the embodiment of the present disclosure, when establishing the electromagnetic wave model library, the method further includes: storing transmission model data of various substances which include at least one of: a reflection coefficient, a refractive index, and a penetration coefficient; or, acquiring material model parameters which includes at least one of: a conductivity, a dielectric constant, a magnetic permeability, and a thickness; and calculating corresponding transmission model data according to the acquired material model parameters and storing the same.

At step 202, a topographic map of a three-dimension space is drawn; the three-dimension space is divided into different types of regional spaces according to a drawing result of the topographic map, wherein different acquisition modes are applied to different types of regional spaces.

In the embodiment of the present disclosure, the step of drawing the topographic map of the three-dimension space includes: setting basic coordinates of the three-dimension space; detecting, under the basic coordinates, a movement track of a user along a horizontal plane of the space, and splicing and drawing the movement track to form a two-dimension topographic map in the three-dimension space; detecting a movement track of the user along a vertical direction of the space, determining a spatial height difference in a longitudinal direction; drawing a topographic map of the three-dimension space on the basis of the two-dimension topographic map, the topographic map of the three-dimension space being formed by layered two-dimension topographic maps.

In the embodiment of the present disclosure, the step of dividing the three-dimension space into different types of regional spaces according to the drawing result of the topographic map includes: grouping the two-dimension topographic maps of different layers as different acquisition nodes according to the drawing result of the topographic map; and performing path planning on each acquisition node, and setting acquisition branches and acquisition routes.

At step 203, at least one of following electromagnetic parameters for each regional space of the three-dimension space is acquired: an electromagnetic wave reflection parameter, an electromagnetic wave refraction parameter, and an electromagnetic wave penetration parameter.

In the embodiment of the present disclosure, the acquired electromagnetic wave reflection parameter characterizes a thickness of an object; the acquired electromagnetic wave refraction parameter characterizes the thickness and a material of the object; and the acquired electromagnetic wave penetration parameter characterizes the thickness and the material of the object.

In the embodiment of the present disclosure, the method further includes: selecting an acquisition mode for a current regional space according to a first-time acquisition result.

In the embodiment of the present disclosure, the step of selecting the acquisition mode for the current regional space according to the first-time acquisition result includes: determining a material of an object in the current regional space according to the first-time acquisition result; selecting at least one of following acquisition modes according to the material: an electromagnetic wave reflection parameter acquisition mode, an electromagnetic wave refraction parameter acquisition mode, and an electromagnetic wave penetration parameter acquisition mode.

In the embodiment of the present disclosure, the method further includes: performing acquisition multiple times in each acquisition mode, and calculating an average variance of the acquired electromagnetic parameters for each acquisition mode; using an acquisition mode with a smallest average variance as a finally selected acquisition mode.

At step 204, the acquired electromagnetic parameters are compared with the electromagnetic wave model data in the electromagnetic wave model library, and a three-dimension space model is established according to a result of the comparison.

In the embodiment of the present disclosure, the step of comparing the acquired electromagnetic parameters with the electromagnetic wave model data in the electromagnetic wave model library and establishing the three-dimension space model according to the result of the comparison includes: comparing an acquired electromagnetic parameter with the electromagnetic wave model data in the electromagnetic wave model library, to obtain a material and a size of an object corresponding to the acquired electromagnetic parameter; and establishing the three-dimension space model based on the topographic map of the three-dimension space according to the material and the size of the object.

In the embodiment of the present disclosure, the method further includes: splicing two or more three-dimension space models; and rendering the spliced three-dimension space model to form a virtual reality (VR) scene.

It will be appreciated by those skilled in the art that the three-dimension space model acquisition method based on electromagnetic waves in this embodiment may be understood with reference to the exemplary details of the three-dimension space model acquisition apparatus based on electromagnetic waves in Fig. 1.

The embodiments of the present disclosure provide an intelligent, convenient, and fast three-dimension space model acquisition apparatus and method for a mobile terminal or a wearable device, which extracts the model parameters of the building and the decorative materials in daily life by the electromagnetic-wave-signal transceiver and geomagnetic sensor in the user's own mobile terminal or wearable device based on the model values of electromagnetic-wave reflection, refraction and penetration, so as to acquire the scenes and spatial parameters of our life and builds a VR model in an omnidirectional 360-degree manner in real time, and forms a 3D map and venue of real VR materials through post rendering and construction. The device is simple and practical, innovative and valuable.

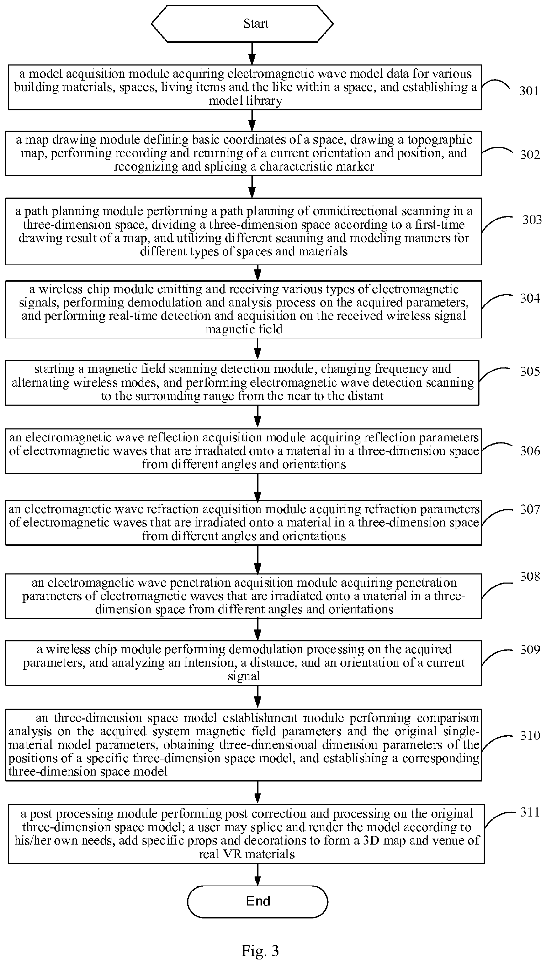

Fig. 3 is a second schematic flow chart of a three-dimension space model acquisition method based on electromagnetic waves according to an embodiment of the present disclosure. As shown in Fig. 3, the three-dimension space model acquisition method based on electromagnetic waves includes:
Step 301: a model acquisition module acquiring electromagnetic wave model data for various building materials, spaces, living items and the like within a space, and establishing a model library.
Step 302: a map drawing module defining basic coordinates of a space, drawing a topographic map, performing recording and returning of a current orientation and position, and recognizing and splicing a characteristic marker.
Step 303: a path planning module performing a path planning of omnidirectional scanning in a three-dimension space, dividing a three-dimension space according to a first-time drawing result of a map, and utilizing different scanning and modeling manners for different types of spaces and materials.
Step 304: a wireless chip module emitting and receiving various types of electromagnetic signals, performing demodulation and analysis process on the acquired parameters, and performing real-time detection and acquisition on the received wireless signal magnetic field.
Step 305: starting a magnetic field scanning detection module, changing frequency and alternating wireless modes, and performing electromagnetic wave detection scanning to the surrounding range from the near to the distant.
Step 306: an electromagnetic wave reflection acquisition module acquiring reflection parameters of electromagnetic waves that are irradiated onto a material in a three-dimension space from different angles and orientations.
Step 307: an electromagnetic wave refraction acquisition module acquiring refraction parameters of electromagnetic waves that are irradiated onto a material in a three-dimension space from different angles and orientations.
Step 308: an electromagnetic wave penetration acquisition module acquiring penetration parameters of electromagnetic waves that are irradiated onto a material in a three-dimension space from different angles and orientations.
Step 309: a wireless chip module performing demodulation processing on the acquired parameters, and analyzing an intension, a distance, and an orientation of a current signal.
Step 310: an three-dimension space model establishment module performing comparison analysis on the acquired system magnetic field parameters and the original single-material model parameters, obtaining three-dimensional dimension parameters of the positions of a specific three-dimension space model, and establishing a corresponding three-dimension space model.
Step 311: a post processing module performing post correction and processing on the original three-dimension space model; further, a user may splice and render the model according to his/her own needs, add specific props and decorations to form a 3D map and venue of real VR materials.

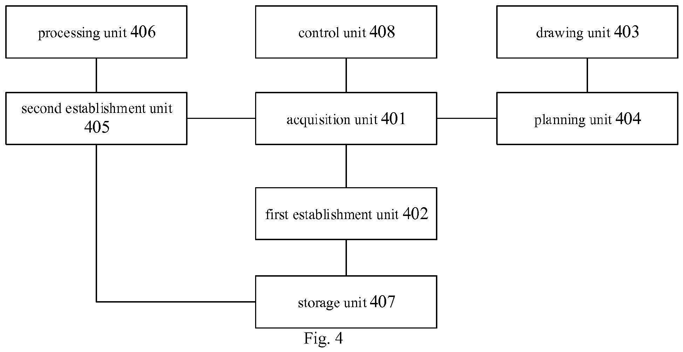

Fig. 4 is a schematic structural diagram of a three-dimension space model acquisition apparatus based on electromagnetic waves according to an embodiment of the present disclosure. As shown in Fig. 4, the apparatus includes: an acquisition unit 401 configured to acquire electromagnetic wave model data of various substances in a space; a first establishment unit 402 configured to establish an electromagnetic wave model library according to the electromagnetic wave model data; a drawing unit 403 configured to draw a topographic map of a three-dimension space; a planning unit 404 configured to divide the three-dimension space into different types of regional spaces according to a drawing result of the topographic map, wherein different acquisition modes are applied to different types of regional spaces; wherein the acquisition unit 401 is further configured to acquire at least one of following electromagnetic parameters for each regional space of the three-dimension space: an electromagnetic wave reflection parameter, an electromagnetic wave refraction parameter, and an electromagnetic wave penetration parameter; and a second establishment unit 405 configured to compare the acquired electromagnetic parameters with the electromagnetic wave model data in the electromagnetic wave model library, and establish a three-dimension space model according to a result of the comparison.

In an embodiment of the present disclosure, the apparatus further includes: a processing unit 406 configured to splice two or more three-dimension space models; and render a spliced three-dimension space model to form a virtual reality (VR) scene.

In an embodiment of the present disclosure, the apparatus further includes: a storage unit 407 configured to store transmission model data of various substances, the transmission model data including at least one of: a reflection coefficient, a refractive index, and a penetration coefficient; the acquisition unit 401 is further configured to acquire material model parameters which include at least one of: a conductivity, a dielectric constant, a magnetic permeability, and a thickness; and the storage unit 407 is further configured to calculate corresponding transmission model data according to the acquired material model parameters and storing the same.

In an embodiment of the present disclosure, the drawing unit 403 is exemplarily configured to: set basic coordinates of the three-dimension space; detect, under the basic coordinates, a movement track of a user along a horizontal plane of the space, and splice and draw the movement track to form a two-dimension topographic map in the three-dimension space; detect a movement track of the user along a vertical direction of the space, determine a spatial height difference in a longitudinal direction; draw a topographic map of the three-dimension space on the basis of the two-dimension topographic map, the topographic map of the three-dimension space being formed by layered two-dimension topographic maps.

In an embodiment of the present disclosure, the planning unit 404 is exemplarily configured to: group the two-dimension topographic maps of different layers as different acquisition nodes according to the drawing result of the topographic map; and perform path planning on each acquisition node, and set acquisition branches and acquisition routes.

In an embodiment of the present disclosure, the second establishment unit 405 is configured to: compare an acquired electromagnetic parameter with the electromagnetic wave model data in the electromagnetic wave model library, to obtain a material and a size of an object corresponding to the acquired electromagnetic parameter; and establish the three-dimension space model based on the topographic map of the three-dimension space according to the material and the size of the object.

In an embodiment of the present disclosure, the acquired electromagnetic wave reflection parameter characterizes a thickness of an object; the acquired electromagnetic wave refraction parameter characterizes the thickness and a material of the object; and the acquired electromagnetic wave penetration parameter characterizes the thickness and the material of the object.

In an embodiment of the present disclosure, the apparatus further includes: a control unit 408 configured to select an acquisition mode for a current regional space according to a first-time acquisition result.

In an embodiment of the present disclosure, the control unit 408 is exemplarily configured to determine a material of an object in the current regional space according to the first-time acquisition result; select at least one of following acquisition modes according to the materials: an electromagnetic wave reflection parameter acquisition mode, an electromagnetic wave refraction parameter acquisition mode, and an electromagnetic wave penetration parameter acquisition mode.

The control unit 408 is configured to perform acquisition multiple times in each acquisition mode, and calculate an average variance of the acquired electromagnetic parameters for each acquisition mode; use an acquisition mode with a smallest average variance as a finally selected acquisition mode.

It will be appreciated by those skilled in the art that, the embodiments of the present disclosure may be provided as a method, a system, or a computer program product. Accordingly, the present disclosure may take the form of a hardware embodiment, a software embodiment, or a combination of software and hardware aspects. Moreover, the present disclosure may take the form of a computer program product embodied on one or more computer-usable storage media (including but not limited to disk storage and optical storage, etc.) including computer-usable program codes.

The present disclosure is described with reference to flowcharts and/or block diagrams of methods, apparatus (systems), and computer program products according to embodiments of the present disclosure. It will be appreciated that the procedures and/or blocks of the flowcharts and/or block diagrams, and a combination of the procedures and/or blocks of the flowcharts and/or block diagrams may be achieved by computer program instructions. These computer program instructions may be provided to a processor of a general purpose computer, a special purpose computer, an embedded processor, or other programmable data processing device to produce a machine such that the execution of the instructions by a processor of a computer or other programmable data processing device produces an apparatus for implementing the functions specified in one or more procedures in the flowcharts and/or specified in one or more blocks in the block diagrams.

These computer program instructions may also be stored in a computer-readable memory that can direct a computer or other programmable data processing device to operate in a particular manner, such that the instructions stored in the computer-readable memory produce a manufactured product comprising the instruction device. The instruction device implements the functions specified in one or more procedures in the flowcharts and/or specified in one or more blocks in the block diagrams.

These computer program instructions may also be loaded onto a computer or other programmable data processing device such that a series of operational steps are performed on the computer or the other programmable device, to produce the computer-implemented processing, thereby the instructions executed on the computer or the other programmable device provide steps for implementing the functions specified in one or more procedures in the flowcharts and/or specified in one or more blocks in the block diagrams.

The above descriptions are merely the preferred embodiments of the present disclosure, and are not intended to limit the protective scope of the present disclosure.

### Industrial Applicability

In the three-dimension space model acquisition method and apparatus based on electromagnetic waves provided by the embodiments of the present disclosure, the three-dimension space is divided into different types of regional spaces, wherein different acquisition modes are applied to different types of regional spaces; the acquired electromagnetic parameters are compared with the electromagnetic wave model data in the electromagnetic wave model library, and a three-dimension space model can be established based on the comparison result.

## Claims

1. A three-dimension space model acquisition method based on electromagnetic waves, comprising:
acquiring electromagnetic wave model data of various substances in a space; establishing an electromagnetic wave model library according to the electromagnetic wave model data;
drawing a topographic map of a three-dimension space; dividing the three-dimension space into different types of regional spaces according to a drawing result of the topographic map, wherein different acquisition modes are applied to different types of regional spaces;
acquiring at least one of following electromagnetic parameters for each regional space of the three-dimension space: an electromagnetic wave reflection parameter, an electromagnetic wave refraction parameter, and an electromagnetic wave penetration parameter; and
comparing the acquired electromagnetic parameters with the electromagnetic wave model data in the electromagnetic wave model library, and establishing a three-dimension space model according to a result of the comparison.

2. The three-dimension space model acquisition method based on electromagnetic waves of claim 1, wherein the method further comprises:
splicing two or more three-dimension space models; and
rendering a spliced three-dimension space model to form a virtual reality, VR, scene.

3. The three-dimension space model acquisition method based on electromagnetic waves of claim 1, wherein, in establishing the electromagnetic wave model library, the method further comprises:
storing transmission model data of various substances, the transmission model data comprising at least one of: a reflection coefficient, a refractive index, a penetration coefficient; or,
acquiring material model parameters, the material model parameters comprising at least one of: a conductivity, a dielectric constant, a magnetic permeability, and a thickness; and calculating corresponding transmission model data according to the acquired material model parameters and storing the same.

4. The three-dimension space model acquisition method based on electromagnetic waves of claim 1, wherein, the drawing the topographic map of the three-dimension space comprises:
setting basic coordinates of the three-dimension space;
detecting, under the basic coordinates, a movement track of a user along a horizontal plane of the space, and splicing and drawing the movement track to form a two-dimension topographic map in the three-dimension space;
detecting a movement track of the user along a vertical direction of the space, determining a spatial height difference in a longitudinal direction; and drawing a topographic map of the three-dimension space on basis of the two-dimension topographic map, the topographic map of the three-dimension space being formed by layered two-dimension topographic maps;
wherein the dividing the three-dimension space into different types of regional spaces according to the drawing result of the topographic map comprises:
grouping the two-dimension topographic maps of different layers into different acquisition nodes according to the drawing result of the topographic map; and
performing path planning on each acquisition node, and setting acquisition branches and acquisition routes.

5. The three-dimension space model acquisition method based on electromagnetic waves of claim 1, wherein the comparing the acquired electromagnetic parameters with the electromagnetic wave model data in the electromagnetic wave model library and establishing the three-dimension space model according to the result of the comparison comprises:
comparing an acquired electromagnetic parameter with the electromagnetic wave model data in the electromagnetic wave model library, to obtain a material and a size of an object corresponding to the acquired electromagnetic parameter; and
establishing the three-dimension space model based on the topographic map of the three-dimension space according to the material and the size of the object.

6. The three-dimension space model acquisition method based on electromagnetic waves of claim 1, wherein the acquired electromagnetic wave reflection parameter characterizes a thickness of an object; the acquired electromagnetic wave refraction parameter characterizes the thickness and a material of the object; and the acquired electromagnetic wave penetration parameter characterizes the thickness and the material of the object;
wherein the method further comprises: performing acquisition multiple times in each acquisition mode, and calculating an average variance of the acquired electromagnetic parameters for each acquisition mode;
using an acquisition mode with a smallest average variance as a finally selected acquisition mode.

7. The three-dimension space model acquisition method based on electromagnetic waves of claim 6, wherein the method further comprises:
selecting an acquisition mode for a current regional space according to a first-time acquisition result;
wherein the selecting the acquisition mode for the current regional space according to the first-time acquisition result comprises:
determining a material of an object in the current regional space according to the first-time acquisition result;
selecting at least one of following acquisition modes according to the material: an electromagnetic wave reflection parameter acquisition mode, an electromagnetic wave refraction parameter acquisition mode, and an electromagnetic wave penetration parameter acquisition mode.

8. A three-dimension space model acquisition apparatus based on electromagnetic waves, comprising:
an acquisition unit configured to acquire electromagnetic wave model data of various substances in a space;
a first establishment unit configured to establish an electromagnetic wave model library according to the electromagnetic wave model data;
a drawing unit configured to draw a topographic map of a three-dimension space;
a planning unit configured to divide the three-dimension space into different types of regional spaces according to a drawing result of the topographic map, wherein different acquisition modes are applied to different types of regional spaces;
wherein the acquisition unit is further configured to acquire at least one of following electromagnetic parameters for each regional space of the three-dimension space: an electromagnetic wave reflection parameter, an electromagnetic wave refraction parameter, and an electromagnetic wave penetration parameter; and
a second establishment unit configured to compare the acquired electromagnetic parameters with the electromagnetic wave model data in the electromagnetic wave model library, and establish a three-dimension space model according to a result of the comparison.

9. The three-dimension space model acquisition apparatus based on electromagnetic waves of claim 8, wherein the apparatus further comprises:
a processing unit configured to splice two or more three-dimension space models; and render a spliced three-dimension space model to form a virtual reality, VR, scene.

10. The three-dimension space model acquisition apparatus based on electromagnetic waves of claim 8, wherein the apparatus further comprises:
a storage unit configured to store transmission model data of various substances, the transmission model data comprising at least one of: a reflection coefficient, a refractive index, a penetration coefficient;
the acquisition unit is further configured to acquire material model parameters, the material model parameters comprising at least one of: a conductivity, a dielectric constant, a magnetic permeability, and a thickness; and
the storage unit is further configured to calculate corresponding transmission model data according to the acquired material model parameters and storing the same.

11. The three-dimension space model acquisition apparatus based on electromagnetic waves of claim 8, wherein the drawing unit is configured to: set basic coordinates of the three-dimension space; detect, under the basic coordinates, a movement track of a user along a horizontal plane of the space, and splice and draw the movement track to form a two-dimension topographic map in the three-dimension space; detect a movement track of the user along a vertical direction of the space, determine a spatial height difference in a longitudinal direction; draw a topographic map of the three-dimension space on basis of the two-dimension topographic map, the topographic map of the three-dimension space being formed by layered two-dimension topographic maps.

12. The three-dimension space model acquisition apparatus based on electromagnetic waves of claim 11, wherein the planning unit is configured to: group the two-dimension topographic maps of different layers into different acquisition nodes according to the drawing result of the topographic map; and perform path planning on each acquisition node, and set acquisition branches and acquisition routes.

13. The three-dimension space model acquisition apparatus based on electromagnetic waves of claim 8, wherein the second establishment unit is configured to: compare an acquired electromagnetic parameter with the electromagnetic wave model data in the electromagnetic wave model library, to obtain a material and a size of an object corresponding to the acquired electromagnetic parameter; and establish the three-dimension space model based on the topographic map of the three-dimension space according to the material and the size of the object.

14. The three-dimension space model acquisition apparatus based on electromagnetic waves of claim 8, wherein the acquired electromagnetic wave reflection parameter characterizes a thickness of an object; the acquired electromagnetic wave refraction parameter characterizes the thickness and a material of the object; and the acquired electromagnetic wave penetration parameter characterizes the thickness and the material of the object; wherein the apparatus further comprises:
a control unit configured to select an acquisition mode for a current regional space according to a first-time acquisition result;
wherein the control unit is configured to determine a material of an object in the current regional space according to the first-time acquisition result; select at least one of following acquisition modes according to the material: an electromagnetic wave reflection parameter acquisition mode, an electromagnetic wave refraction parameter acquisition mode, and an electromagnetic wave penetration parameter acquisition mode;
wherein the control unit is further configured to perform acquisition multiple times in each acquisition mode, and calculate an average variance of the acquired electromagnetic parameters for each acquisition mode; use an acquisition mode with a smallest average variance as a finally selected acquisition mode.

15. A storage medium which is configured to store program codes for performing the method of any of claims 1 to 7.
